# EUROPÄISCHE PATENTSCHRIFT

(11) **EP 1 640 230 B1**
(45) Veröffentlichungstag und Bekanntmachung des Hinweises auf die Patenterteilung: **22.08.2007**
(21) Anmeldenummer: 05019403.4
(22) Anmeldetag: 07.09.2005
(51) Int. Cl.: B60T 7/10

(54) **Mechanische Betätigungsvorrichtung für eine Bremse einer Arbeitsmaschine**
Mechanical brake actuator for a working machine
Dispositif de commande de freinage d'un machine de travail

(30) Priorität: 24.09.2004 DE 102004046315
(43) Veröffentlichungstag der Anmeldung: 29.03.2006
(73) Patentinhaber: STILL GMBH, 22113 Hamburg (DE)
(72) Erfinder: Appeldorn, Matthias, 22175 Hamburg (DE)
(74) Vertreter: Geirhos, Johann

(56) Entgegenhaltungen:
- EP-A- 0 250 185
- DE-A1- 19 801 382
- JP-A- 11 043 027

## Beschreibung

Die Erfindung betrifft eine mechanische Betätigungsvorrichtung für eine Bremse einer Arbeitsmaschine, insbesondere eines Flurförderzeugs, bei der ein Betätigungshebel an einem Bremsengehäuse drehbar gelagert ist, wobei eine Bremsenstellwelle vorgesehen ist, mit der eine Drehbewegung des Betätigungshebels auf einen in dem Bremsengehäuse angeordneten Bremskörper übertragbar ist, wobei der Betätigungshebel mittels eines Freilaufs mit der Bremsenstellwelle verbunden ist, derart, dass eine Drehbewegung des Betätigungshebels in Richtung einer Betätigung der Bremse auf die Bremsenstellwelle übertragen wird und dass eine Drehbewegung des Betätigungshebels in Richtung eines Lösens der Bremse nicht auf die Bremsenstellwelle übertragen wird.

Derart ausgeführte Bremsen werden häufig in Arbeitsmaschinen, insbesondere in Flurförderzeugen wie z.B. Gabelstaplern eingesetzt. Die Bremse ist dabei in eine Achse der Arbeitsmaschine integriert, wobei das Bremsengehäuse von dem Achsgehäuse gebildet ist. Neben der Bremse können in dem Achsgehäuse beispielsweise ein elektrischer Antriebsmotor, ein Differentialgetriebe und mehrere Planetengetriebe angeordnet sein. An den stirnseitigen Enden weist die Achse jeweils einen Radflansch auf, an dem die Antriebsräder der Arbeitsmaschine befestigt werden können.

Die Bremse ist mechanisch durch Drehen am Betätigungshebel betätigbar. Hierzu können am Betätigungshebel beispielsweise ein Bowdenzug oder ein Hebelgestänge angreifen. Die Drehbewegung des Betätigungshebels wird über die Bremsenstellwelle in das Innere des Bremsengehäuses übertragen, wo die Bewegung der Bremsenstellwelle direkt oder indirekt auf einen Bremskörper wirkt. Die Bremsenstellwelle kann hierzu beispielsweise mit einem Exzenter versehen sein, mit dem die Drehbewegung der Bremsenstellwelle in eine Linearbewegung des nicht rotierenden Bremskörpers umgesetzt wird, der dabei in Richtung eines rotierenden Bremskörpers bewegt wird. Die Bremskörper können beispielsweise von Bremsscheiben oder Bremslamellen gebildet sein. Bremslamellen sind üblicherweise nasslaufend ausgeführt.

Bei nicht betätigter Bremse ist zwischen einem nicht rotierenden Bremskörper und einem rotierenden Bremskörper ein Luftspalt vorhanden. Bei einer Betätigung der Bremse muss dieser Luftspalt zunächst von der Bewegung des nicht rotierenden Bremskörpers überbrückt werden, um mit dem rotierenden Bremskörper in Kontakt zu treten und dadurch ein Bremsmoment zu erzeugen. In Folge eines Verschleißes der Bremskörper kann sich über die Betriebsdauer der Bremse der Luftspalt und damit der Betätigungsweg des nicht rotierenden Bremskörpers vergrößern. Entsprechend vergrößert sich auch der Betätigungsweg des Betätigungshebels von seiner Neutralstellung bis zum Eintreten einer Bremswirkung.

Aus der EP 0 250 185 A1 ist eine Betätigungsvorrichtung für eine Feststellbremse eines Fahrzeugs bekannt. Ein Betätigungshebel wirkt dabei über eine Ratschenvorrichtung auf einen Bremszug, welcher den Betätigungshebel mit der Bremse verbindet.

Der vorliegenden Erfindung liegt die Aufgabe zu Grunde, eine mechanische Betätigungsvorrichtung zur Verfügung zu stellen, bei der über die Lebensdauer der Bremse der Luftspalt zwischen den Bremskörpern und der Betätigungsweg des Betätigungshebels konstant bleiben sowie die Neutralstellung des Betätigungshebels unverändert bleibt.

Diese Aufgabe wird erfindungsgemäß dadurch gelöst, dass das Bremsengehäuse von einem Achskörper einer Achse der Arbeitsmaschine gebildet ist und dass in einem begrenzten Winkelbereich eine freie Drehbarkeit der Bremsenstellwelle gegenüber dem Bremsengehäuse ermöglicht ist. Die Bremse ist dabei in eine Achse, vorzugsweise eine Antriebsachse der Arbeitsmaschine integriert. Der begrenzte Winkelbereich entspricht dem Drehwinkel der Bremsenstellwelle während der normalen Betätigung der Bremse. Mittels des Freilaufs wird eine auf den Betätigungshebel ausgeübte Bremsbetätigungskraft auf die Bremsenstellwelle und damit auf den Bremskörper übertragen. Eine auf den Betätigungshebel in entgegengesetzte Richtung ausgeübte Kraft wirkt hingegen aufgrund des Freilaufs nicht auf die Bremsenstellwelle. Von dem Bremskörper aus betrachtet wird eine Rückstellbewegung - also die Bewegung des Bremskörpers in Richtung eines Lösens der Bremse - auf die Bremsenstellwelle und von dieser mittels des in dieser Richtung blockierenden Freilaufs auf den Betätigungshebel übertragen.

Dies wird dadurch erreicht, dass zwischen der Bremsenstellwelle und dem Bremsengehäuse eine Nabe angeordnet ist, wobei in dem begrenzten Winkelbereich die Bremsenstellwelle relativ zur Nabe frei drehbar ist. Über den begrenzten Winkelbereich hinaus ist hingegen keine Drehung der Bremsenstellwelle relativ zur Nabe möglich. Konstruktiv kann dies beispielsweise durch eine Passfederverbindung erreicht werden, bei der die Nut eine größere Breite aufweist als die ihr zugeordnete Passfeder.

Zweckmäßigerweise ist die Nabe als Rutschnabe ausgeführt, derart, dass durch Überwinden eines definierten Rutschmoments eine Drehung der Bremsenstellwelle relativ zum Bremsengehäuse über den begrenzten Winkelbereich hinaus möglich ist. Die Rutschnabe ermöglicht also eine Drehung der Bremsenstellwelle über den definierten Winkelbereich hinaus. Hierfür ist jedoch ein erhöhtes Drehmoment aufzubringen, das größer ist, als das Rutschmoment der Rutschnabe. Während des Betriebs der Bremse kommt es insbesondere dann zum Drehen der Bremsenstellwelle über den begrenzten Winkelbereich hinaus, wenn sich der Luftspalt der Bremse in Folge von Verschleiß am Bremskörper vergrößert hat und sich dadurch auch der Betätigungsweg des Bremskörpers vergrößert.

Dies wird in besonders einfacher Weise dadurch erreicht, dass eine Drehung der Bremsenstellwelle über den definierten Winkelbereich hinaus durch eine Drehbarkeit der Nabe relativ zum Bremsengehäuse ermöglicht ist. Um eine Drehung der Nabe relativ zum Bremsengehäuse zu erreichen, muss eine definierte Haftreibung zwischen Nabe und Bremsengehäuse überwunden werden.

Das Vorhandensein eines Luftspalts bei nicht betätigter Bremse wird dadurch sichergestellt, dass ein Mittel zum Erzeugen eines Rückstellmoments für die Bremsenstellwelle vorgesehen ist. Das Mittel zum Erzeugen eines Rückstellmoments für die Bremsenstellwelle kann beispielsweise von einer auf den Bremskörper wirkenden Druckfeder gebildet sein, die eine Kraft auf den Bremskörper ausübt, welche über den Exzenter an der Bremsenstellwelle auf diese als Rückstellmoment wirkt. Dieses Rückstellmoment wird über den Freilauf auch auf den Betätigungshebel übertragen. Das an der Bremsenstellwelle anstehende Rückstellmoment ist kleiner als das zum Drehen der Nabe erforderliche Rutschmoment.

Unabhängig hiervon ist ein weiteres Mittel zum Erzeugen eines Rückstellmoments für den Betätigungshebel vorgesehen. Dieses weitere Mittel zum Erzeugen eines Rückstellmoments für den Betätigungshebel führt erst dann zu einer Rückstellbewegung am Betätigungshebel, wenn die Bremsenstellwelle bereits ihren von der Nabe definierten Anschlag erreicht hat. Das Mittel zum Erzeugen eines weiteren Rückstellmoments für den Betätigungshebel kann beispielsweise von einer außen an Betätigungshebel angeordneten Feder gebildet sein.

Für den bevorzugten Anwendungsfall der Bremse ist der Bremskörper vorzugsweise von einer Bremsscheibe oder von mehreren Bremslamellen gebildet.

Weitere Vorteile und Einzelheiten der Erfindung werden anhand des in den schematischen Figuren dargestellten Ausführungsbeispiels näher erläutert. Dabei zeigt
- Figur 1: eine Achse einer Arbeitsmaschine mit integrierter Bremse,
- Figur 2: eine erfindungsgemäße Betätigungsvorrichtung,
- Figur 3: den Schnitt B-B durch die Betätigungsvorrichtung,
- Figur 4: den Schnitt A-A durch die Betätigungsvorrichtung.

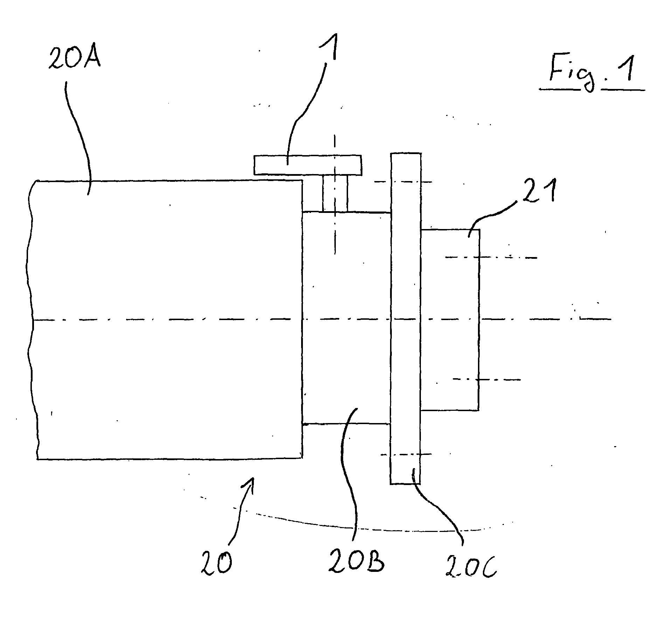

In Figur 1 ist eine Achse einer Arbeitsmaschine mit integrierter Bremse dargestellt. Die Achse weist ein Achsgehäuse 20 auf, wobei in einem ersten Gehäuseabschnitt 20A ein elektrischer Antriebsmotor und in einem zweiten Gehäuseabschnitt 20B eine Bremse angeordnet ist. Weiter weist das Achsgehäuse 20 einen Flansch 20C auf, mit dem die Achse an einem Rahmen einer Arbeitsmaschine befestigt wird. Ein Radflansch 21 ist drehbar am Achsgehäuse 20 gelagert und dient zur Befestigung eines Rads der Arbeitsmaschine. Die Achse ist als Starrachse ausgebildet, sodass sich auf der in der Figur nicht dargestellten linken Seite der Achse ebenfalls ein Flansch zur Befestigung an einem Rahmen der Arbeitsmaschine und ein Radflansch befinden. Außen an dem Gehäuseabschnitt 20B für die Bremse ist ein Betätigungshebel 1 zur Betätigung der Bremse angeordnet. Auf den Betätigungshebel 1 kann mittels nicht dargestellter Bowdenzüge ein Drehmoment ausgeübt werden, wobei ein erster Bowdenzug mit einer Betätigungsvorrichtung, z.B. einem Bremspedal, für eine Betriebsbremse und ein zweiter Bowdenzug mit einer Betätigungsvorrichtung, z.B. einem Handbremshebel, für eine Parkbremse verbunden ist.

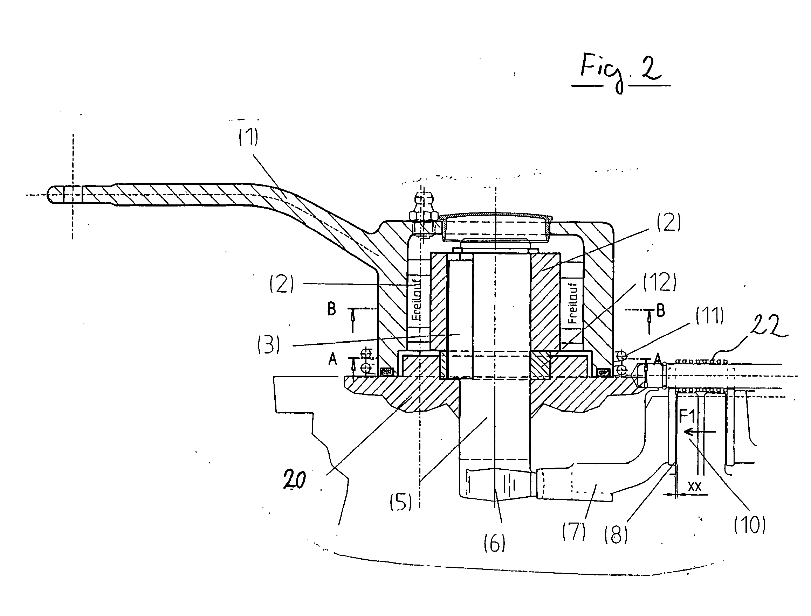

Figur 2 zeigt eine Schnittdarstellung einer erfindungsgemäßen Bremsvorrichtung. Zu erkennen ist der Betätigungshebel 1, der an dem Gehäuse 20 der Achse, der damit das Bremsengehäuse bildet, drehbar gelagert ist. Im Inneren des Betätigungshebels 1 ist ein Freilauf 2 angeordnet, der den Betätigungshebel 1 über eine Passfeder 3 mit einer Bremsenstellwelle 5 verbindet. Die Passfeder 3 stellt eine drehstarre Verbindung zwischen dem Innenring des Freilaufs und der Bremsenstellwelle 5 her. Der Freilauf 2 ist derart ausgeführt, dass eine Bewegung des Betätigungshebels 1 nach in der Zeichnung hinten auf die Bremsenstellwelle 5 übertragen wird, hingegen eine Bewegung des Betätigungshebels 1 nach in der Zeichnung vorne von der Bremsenstellwelle 5 entkoppelt ist. Die Bremsenstellwelle ist über eine Nabe 12 an dem Gehäuse 20 gelagert. Die Nut in der Nabe 12, in die die Passfeder 3 eingreift, ist breiter als die Passfeder, sodass in einem begrenzen Winkelbereich eine freie Drehbarkeit der Bremsenstellwelle 5 relativ zur Nabe 12 gewährleistet ist. Gegenüber dem Gehäuse 20 weist die Nabe 12 eine Rutschverbindung auf, sodass ein Drehen der Nabe 12 relativ zum Gehäuse 20 grundsätzlich möglich ist, jedoch nur, wenn ein auf die Nabe 12 wirkendes Drehmoment größer ist, als ein definiertes Rutschmoment zwischen Nabe 12 und Gehäuse 20.

Die Bremsenstellwelle 5 weist an ihrem unteren Ende einen Exzenter 6 auf, mit dem eine Drehbewegung der Bremsenstellwelle 5 in eine Linearbewegung umgesetzt wird, die über einen Druckkörper 7 auf den nicht rotierenden Bremsköper 8 übertragen wird, der im vorliegenden Ausführungsbeispiel bei Betätigung der Bremse in Richtung der rotierenden Bremskörper 10 bewegt wird. Die Bremskörper 8, 10 sind von Bremslamellen gebildet. Bei nicht betätigter Bremse befindet sich zwischen dem nicht rotierenden Bremskörper 8 und dem rotierenden Bremskörper 10 ein Luftspalt xx.

Ein Mittel 22 zum Erzeugen einer Rückstellkraft F1 für den nicht rotierenden Bremskörper 8 ist von einer Druckfeder gebildet. Die Druckfeder sorgt dafür, dass nach einem Freigeben des Betätigungshebels 1 der Luftspalt xx wieder hergestellt wird und dadurch der nicht rotierende Bremskörper 8, der Druckköper 7, die Bremsenstellwelle 5 und der Betätigungshebel 1 in ihre Ausgangsstellung zurückbewegt werden. Weiter ist eine Feder 11 vorgesehen, die ein ausschließlich auf den Betätigungshebel wirkendes Rückstellmoment erzeugt, welches jedoch aufgrund der Anordnung des Freilaufs 2 nicht auf die Bremsenstellwelle 5 übertragen wird.

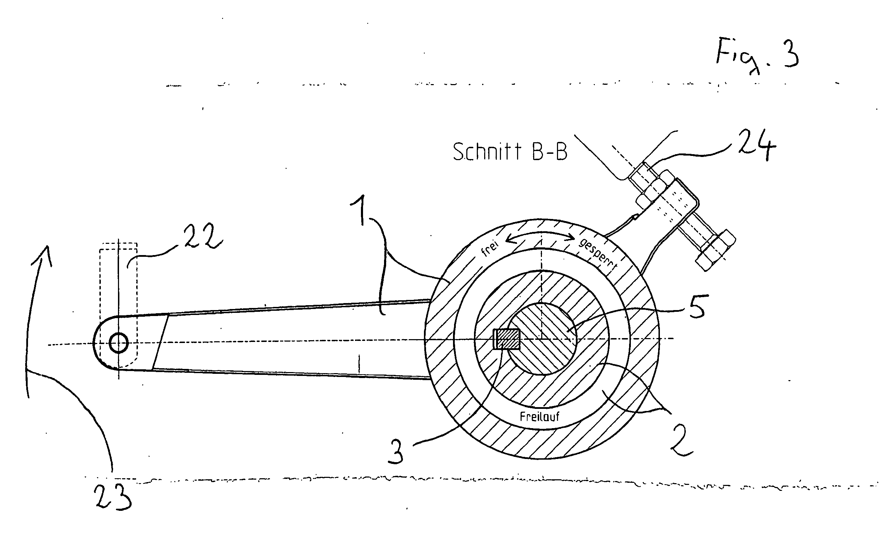

In Figur 3 ist der Schnitt B-B durch die in Fig. 2 dargestellte Betätigungsvorrichtung abgebildet. Zu erkennen sind insbesondere der Betätigungshebel 1, der Freilauf 2, die Bremsenstellwelle 5 und die Passfeder 3. Die Passfeder 3 stellt eine drehstarre Verbindung zwischen dem Innenring des Freilaufs 2 und der Bremsenstellwelle 5 her. Mit gestrichelten Linien ist ein an den Betätigungshebel 1 angreifender Bowdenzug 25 dargestellt, mit dem der Betätigungshebel 1 zur Betätigung der Bremse in Richtung 23 bewegt wird. Die Stellung des Betätigungshebels 1 bei nicht betätigter Bremse ist durch den einstellbaren Anschlag 24 definiert.

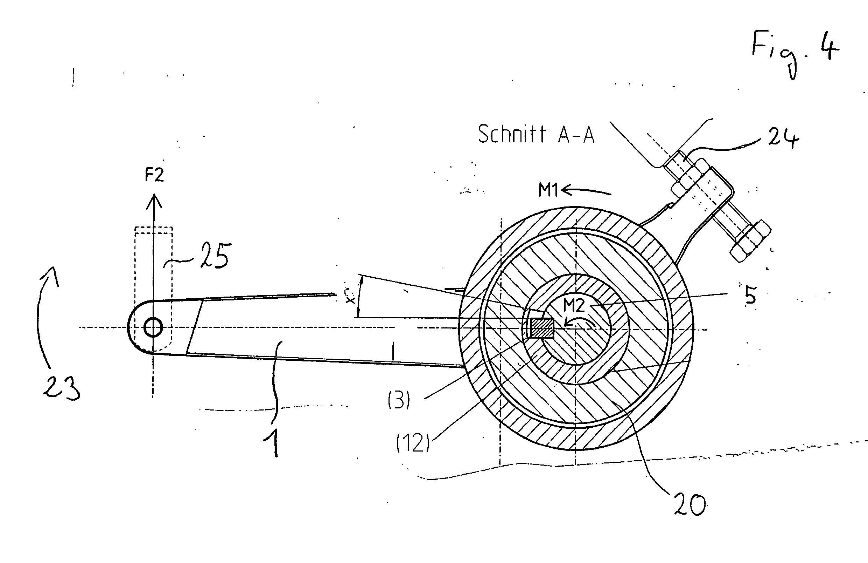

Die erfindungsgemäße Funktionsweise der Bremse wird besonders gut aus Figur 4 deutlich, in der ein Schnitt A-A durch die Betätigungsvorrichtung gemäß Fig. 2 gezeigt ist. Bei einer Betätigung der Bremse durch die Kraft F2 werden der Betätigungshebel 1 und die Bremsenstellwelle 5 in Richtung 23 gedreht. Die Bremswirkung tritt ein, wenn der nicht drehbare Bremskörper den Luftspalt xx gemäß Fig.1 überbrückt hat, was einer Drehung der Bremsenstellwelle 5 um den Winkelbetrag x entspricht. Die mit Spiel versehene Passfederverbindung zwischen der Bremsenstellwelle 5 und der Nabe 12 ermöglicht eine freie Drehung der Bremsenstellwelle 5 genau um diesen Winkelbetrag x.

Wenn sich der Luftspalt xx aufgrund eines Verschleißes der Bremskörper 8, 10 vergrößert hat, reicht eine Drehung der Bremsenstellwelle 5 um den Winkelbetrag x nicht aus, um eine Bremswirkung zu erzielen. Wenn in diesem Fall die Passfeder 3 an dem in der Zeichnung oberen Ende der Nut anliegt, bewirkt die Betätigungskraft F2 eine Rutschen der Nabe 12 relativ zu dem Gehäuse 20, sodass insgesamt eine Drehung der Bremsenstellwelle um einen Winkelbetrag größer als x stattfindet, bis der Luftspalt xx überbrückt ist und damit eine Bremswirkung eintritt.

Wenn nun der Betätigungshebel 1 freigegeben wird, bewirkt die Kraft F1 (siehe Fig. 2), die über den Exzenter 6 auf die Bremsenstellwelle 5 als Moment M2 wirkt, eine Rückstellung der Bremsenstellwelle 5 um den Winkelbetrag x. Dieser Winkelbetrag x ist vorgegeben durch die Breite der Nut in der Nabe 12. Dadurch wird der Luftspalt an den Bremskörpern 8, 10 automatisch auf den gewünschten Wert xx eingestellt. Um dies sicherzustellen, ist die Feder 22 derart ausgelegt, dass das Moment M2 nicht ausreicht, um die Nabe 12 relativ zu dem Gehäuse 20 zu drehen. Nachdem die Bremsenstellwelle 5 nun ihren durch die Nabe 12 neu definierten Anschlag erreicht hat, dreht das Moment M2 der Feder 11 den Betätigungshebel 1 bis zum Erreichen des Anschlags 24 zurück. Dies wird durch den Freilauf 2 ermöglicht, der ein Drehen des Betätigungshebels 1 entgegen der Richtung 23 unabhängig von der Bremsenstellwelle 5 zulässt.

Durch die erfindungsgemäße Kombination der als Rutschnabe ausgeführten Nabe 12 mit dem Freilauf 2 wird eine fortlaufende automatische Einstellung des Luftspalts der Bremse auf einen gleich bleibenden Wert xx erreicht, wobei der Betätigungshebel 1 jederzeit eine definierte Neutralstellung aufweist.

## Patentansprüche

1. Mechanische Betätigungsvorrichtung für eine Bremse einer Arbeitsmaschine, insbesondere eines Flurförderzeugs, bei der ein Betätigungshebel (1) an einem Bremsengehäuse (20) drehbar gelagert ist, wobei eine Bremsenstellwelle (5) vorgesehen ist, mit der eine Drehbewegung des Betätigungshebels (1) auf einen in dem Bremsengehäuse (20) angeordneten Bremskörper (8) übertragbar ist, wobei der Betätigungshebel (1) mittels eines Freilaufs (2) mit der Bremsenstellwelle (5) verbunden ist, derart, dass eine Drehbewegung des Betätigungshebels (1) in Richtung (23) einer Betätigung der Bremse auf die Bremsenstellwelle (5) übertragen wird und dass eine Drehbewegung des Betätigungshebels (1) in Richtung eines Lösens der Bremse nicht auf die Bremsenstellwelle (5) übertragen wird, **dadurch gekennzeichnet, dass** das Bremsengehäuse (20) von einem Achskörper einer Achse der Arbeitsmaschine gebildet ist und dass in einem begrenzten Winkelbereich (x) eine freie Drehbarkeit der Bremsenstellwelle (5) gegenüber dem Bremsengehäuse (20) ermöglicht ist.

2. Betätigungsvorrichtung nach Anspruch 1, **dadurch gekennzeichnet, dass** zwischen der Bremsenstellwelle (5) und dem Bremsengehäuse (20) eine Nabe (12) angeordnet ist, wobei in dem begrenzten Winkelbereich (x) die Bremsenstellwelle (5) relativ zur Nabe (12) frei drehbar ist.

3. Betätigungsvorrichtung nach Anspruch 2, **dadurch gekennzeichnet, dass** die Nabe (12) als Rutschnabe ausgeführt ist, derart, dass durch Überwinden eines definierten Rutschmoments eine Drehung der Bremsenstellwelle (5) relativ zum Bremsengehäuse (20) über den begrenzten Winkelbereich (x) hinaus möglich ist.

4. Betätigungsvorrichtung nach Anspruch 3, **dadurch gekennzeichnet, dass** eine Drehung der Bremsenstellwelle (5) über den begrenzten Winkelbereich (x) hinaus durch eine Drehbarkeit der Nabe (12) relativ zum Bremsengehäuse (20) ermöglicht ist.

5. Betätigungsvorrichtung nach einem der Ansprüche 1 bis 4, **dadurch gekennzeichnet, dass** ein Mittel (22) zum Erzeugen eines Rückstellmoments (M2) für die Bremsenstellwelle (5) vorgesehen ist.

6. Betätigungsvorrichtung nach einem der Ansprüche 1 bis 5, **dadurch gekennzeichnet, dass** ein Mittel (11) zum Erzeugen eines Rückstellmoments (M1) für den Betätigungshebel (1) vorgesehen ist.

7. Betätigungsvorrichtung nach einem der Ansprüche 1 bis 6, **dadurch gekennzeichnet, dass** der Bremskörper (8, 10) von einer Bremsscheibe oder von mehreren Bremslamellen gebildet.

## Claims

1. Mechanical brake actuator for a working machine, in particular an industrial truck, in which an actuation lever (1) is rotatably mounted on a brake housing (20), wherein a brake actuator shaft (5) is provided with which a rotational movement of the actuation lever (1) can be transmitted to a brake element (8) which is arranged in the brake housing (20), wherein the actuation lever (1) is connected to the brake actuator shaft (5) by means of a free wheel (2) in such a way that a rotational movement of the actuation lever (1) in the direction (23) of actuating the brake is transmitted to the brake actuator shaft (5), and that a rotational movement of the actuation lever (1) in the direction of releasing the brake is not transmitted to the brake actuator shaft (5), **characterized in that** the brake housing (20) is formed by an axle body of an axle of the working machine, and **in that** free rotatability of the brake actuator shaft (5) with respect to the brake housing (20) is made possible within a limited angular range (x).

2. Actuator according to Claim 1, **characterized in that** a hub (12) is arranged between the brake actuator shaft (5) and the brake housing (20), wherein the brake actuator shaft (5) can rotate freely in relation to the hub (12) within the limited angular range (x).

3. Actuator according to Claim 2, **characterized in that** the hub (12) is embodied as a sliding hub in such a way that after a defined sliding torque is overcome rotation of the brake actuator shaft (5) in relation to the brake housing (20) is possible beyond the limited angular range (x).

4. Actuator according to Claim 3, **characterized in that** rotation of the brake actuator shaft (5) beyond the limited angular range (x) is made possible by rotatability of the hub (12) in relation to the brake housing (20).

5. Actuator according to one of Claims 1 to 4, **characterized in that** a means (22) is provided for generating a restoring torque (M2) for the brake actuator shaft (5).

6. Actuator according to one of Claims 1 to 5, **characterized in that** a means (11) is provided for generating a restoring torque (M1) for the actuation lever (1).

7. Actuator according to one of Claims 1 to 6, **characterized in that** the brake element (8, 10) is formed by a brake disc or by a plurality of brake plates.

## Revendications

1. Dispositif mécanique de commande de freinage d'une machine de travail, en particulier d'un chariot de manutention, dans lequel un levier de commande (1) est supporté de façon rotative sur un boîtier de frein (20), dans lequel il est prévu un arbre de réglage de frein (5) avec lequel un mouvement de rotation du levier de commande (1) peut être transmis à un corps de frein (8) disposé dans le boîtier de frein (20), dans lequel le levier de commande (1) est relié à l'arbre de réglage de frein (5) au moyen d'une roue libre (2), de telle manière qu'un mouvement de rotation du levier de commande (1) dans le sens (23) d'une commande du frein soit transmis à l'arbre de réglage de frein (5) et qu'un mouvement de rotation du levier de transmission (1) dans le sens du relâchement du frein ne soit pas transmis à l'arbre de réglage de frein (5), **caractérisé en ce que** le boîtier de frein (20) est formé par un corps d'axe d'un axe de la machine de travail et **en ce qu'**une rotation libre de l'arbre de réglage de frein (5) par rapport au boîtier de frein (20) est permise dans une zone angulaire limitée (x).

2. Dispositif de commande selon la revendication 1, **caractérisé en ce qu'**un moyeu (12) est disposé entre l'arbre de réglage de frein (5) et le boîtier de frein (20), l'arbre de réglage de frein (5) pouvant tourner librement par rapport au moyeu (12) dans la zone angulaire limitée (x).

3. Dispositif de commande selon la revendication 2, **caractérisé en ce que** le moyeu (12) est un moyeu à friction, de telle manière qu'une rotation de l'arbre de réglage de frein (5) par rapport au boîtier de frein (20) au-delà de la zone angulaire limitée (x) soit possible par dépassement d'un couple de friction défini.

4. Dispositif de commande selon la revendication 3, **caractérisé en ce qu'**une rotation de l'arbre de réglage de frein (5) au-delà de la zone angulaire limitée (x) est rendue possible par une rotation du moyeu (12) par rapport au boîtier de frein (20).

5. Dispositif de commande selon l'une quelconque des revendications 1 à 4, **caractérisé en ce qu'**il est prévu un moyen (22) pour produire un couple de rappel (M2) pour l'arbre de réglage de frein (5).

6. Dispositif de commande selon l'une quelconque des revendications 1 à 5, **caractérisé en ce qu'**il est prévu un moyen (11) pour produire un couple de rappel (M1) pour le levier de commande (1).

7. Dispositif de commande selon l'une quelconque des revendications 1 à 6, **caractérisé en ce que** le corps de frein (8, 10) est formé par un disque de frein ou par plusieurs lamelles de frein.
